# DEMANDE DE BREVET EUROPEEN

(11) **EP 4 840 605 A1**
(43) Date de publication de la demande: **18.11.2026**
(21) Numéro de dépôt: 26178520.8
(22) Date de dépôt: 13.05.2026
(51) Int. Cl.: B27N 3/04, B27N 5/00, B27N 3/02, B27N 3/20

(54) **COMPOSITION BIOSOURCÉE À BASE DE RÉSIDUS FIBREUX ISSUS DE LA TRANSFORMATION DE DÉCHETS ORGANIQUES ET PROCÉDÉ DE FABRICATION D'UN BIOMATÉRIAU**

(30) Priorité: 14.05.2025 EP 25305684
(71) Demandeur: Bihur, 64240 Ayherre (FR)
(72) Inventeur: ETCHEVERRY, Pierre, 64600 Anglet (FR)
(74) Mandataire: Santarelli

(57) **Abrégé**

La présente invention est relative à une composition pour la fabrication d'un article thermo-moulé comprenant des résidus fibreux issus de la transformation de déchets organiques végétaux provenant de fruits, de légumes et/ou de céréales, et au moins un liant liquide, dispersé de manière homogène dans les fibres desdits résidus fibreux.

## Description

### DOMAINE DE L'INVENTION

La présente invention concerne une nouvelle composition pour la fabrication d'un article thermo-moulé comprenant des résidus fibreux issus de la transformation de déchets organiques, plus particulièrement de déchets végétaux, notamment obtenus à partir de fruits, de légumes et/ou de céréales, et au moins un liant sous forme liquide, dispersé de manière homogène dans les fibres desdits résidus fibreux. L'invention vise également un procédé de préparation d'un article thermo-moulé à partir de ladite composition, notamment par thermocompression, ainsi que son utilisation dans la fabrication d'articles de construction et/ou de mobilier, et lesdits articles obtenus à partir de ladite composition.

### ARRIERE-PLAN TECHNOLOGIQUE

La fabrication traditionnelle d'articles de construction et/ou de mobilier (par exemple de meubles, de portes ou encore de parquet) repose principalement sur l'utilisation de bois ou de fibres végétales, des matériaux dont l'extraction entraîne des impacts environnementaux importants, notamment en termes de déforestation et de consommation énergétique. Par ailleurs, d'autres matériaux tels que les plastiques, largement utilisés dans l'ameublement, présentent eux aussi des inconvénients, notamment une forte dépendance aux ressources fossiles et un recyclage très limité.

Dans ce contexte, diverses approches ont été proposées pour élaborer des matériaux alternatifs à partir de matières végétales fibreuses ou de biomasses d'origine organique, notamment en vue de la fabrication de produits mis en forme par moulage ou thermocompression.

A titre d'exemple, WO 02/20667 décrit un procédé de fabrication d'articles thermo-moulés à partir d'un mélange comprenant des fibres végétales, de l'eau et au moins un liant. Ce mélange est introduit dans un moule chauffé, puis soumis à une séquence spécifique de pression et de température conduisant à la formation de vapeur dans le moule en vue de favoriser la répartition du mélange dans le moule et l'obtention d'un article moulé substantiellement sec.

D'autres documents, tels que WO2018/078391, WO2015/011640 et WO2014/138598 décrivent également des procédés de valorisation de biomasses végétales, de sous-produits agro-industriels ou de résidus lignocellulosiques, en association éventuelle avec des résines, des liants et divers traitements de transformation, notamment pour la fabrication de panneaux ou de biomatériaux.

Il subsiste toutefois un besoin de disposer de compositions biosourcées, à base de résidus organiques végétaux, permettant une mise en forme par thermocompression dans des conditions industriellement acceptables, tout en assurant une homogénéité satisfaisante, un démoulage aisé et des propriétés mécaniques compatibles avec des applications comme la construction et/ou le mobilier.

Les inventeurs ont mis en évidence que la composition selon l'invention présentant notamment une teneur élevée en fibres, une teneur limitée en sucres et une granulométrie médiane contrôlée permet d'obtenir une composition particulièrement adaptée à la thermocompression, notamment en termes d'homogénéité, de cohésion et de démoulage.

L'invention vise ainsi à proposer une composition pour la fabrication d'un article thermo-moulé, comprenant des résidus fibreux issus de la transformation de déchets organiques, notamment issus de l'industrie agroalimentaire, associés à au moins un liant liquide dispersé de manière homogène dans les fibres desdits résidus fibreux. Cette composition permet la fabrication de biomatériaux présentant de bonnes performances mécaniques, tout en offrant un procédé de fabrication économique. Cette approche favorise l'économie circulaire en valorisant des déchets organiques et en réduisant l'utilisation de ressources fossiles, tout en offrant des matériaux robustes et esthétiques et adaptés à la fabrication d'articles de construction et/ou de mobilier. Cette valorisation contribue à une réduction considérable de l'empreinte carbone, pouvant aller jusqu'à tendre à zéro.

### RESUME DE L'INVENTION

Un premier objet de la présente invention concerne une composition pour la fabrication d'un article thermo-moulé, comprenant des résidus fibreux issus de la transformation de déchets organiques végétaux provenant de fruits, de légumes et/ou de céréales, et au moins un liant sous forme liquide, dispersé de manière homogène dans les fibres desdits résidus.

Il a particulièrement été mis en évidence qu'une telle composition est particulièrement adapté à la fabrication d'articles thermo-moulés présentant d'excellentes performances mécaniques, tout en pouvant être mise en oeuvre selon un procédé économiquement avantageux.

L'invention a également pour objet un procédé de fabrication d'un article thermo-moulé comprenant les étapes suivantes :
a) Mise en moule de la composition selon l'une quelconque des revendications précédentes ;
b) Chauffage du moule, de préférence à une température comprise entre 80°C et 300°C, et application d'une pression, de préférence à une pression comprise entre 100 bars et 300 bars, et pendant une durée comprise entre 1 minute et 20 minutes.

L'invention concerne également un article thermo-moulé obtenu par le procédé selon l'invention et l'utilisation d'une composition selon la présente invention dans la fabrication d'articles de construction et/ou de mobilier.

L'invention concerne également un article de construction et/ou un article de mobilier, comprenant une composition de la présente invention.

### DESCRIPTION DETAILLEE

La présente invention concerne une composition pour la fabrication d'un article thermo-moulé, comprenant des résidus fibreux issus de la transformation de déchets organiques végétaux provenant de fruits, de légumes et/ou de céréales, et au moins un liant, caractérisé en ce que :
- lesdits résidus fibreux comprennent au moins 20% en poids de fibres, le pourcentage étant indiqué sur le poids sec des résidus fibreux ;
- lesdits résidus fibreux présentent une granulométrie médiane D50 inférieure ou égale à 2 mm ;
- lesdits résidus fibreux comprennent moins de 15% en poids de sucre, le pourcentage étant indiqué sur le poids sec des résidus fibreux ; et
- ledit liant est sous forme liquide et est dispersé de manière homogène dans les fibres desdits résidus fibreux.

Par « article thermo-moulé », on entend au sens de la présente invention, un article ayant subi une étape de thermocompression.

Par « résidus », on entend des résidus sous forme de particules, plus particulièrement des particules d'une taille comprise entre 0,2 mm et 2 cm.

On notera que dans le cadre de la présente demande, et sauf stipulation contraire, les gammes de valeurs indiquées s'entendent bornes incluses.

Dans la présente demande, les expressions « résidus fibreux issus de la transformation de déchets organiques », « résidus fibreux issus de déchets organiques » et le terme « résidus » ou « résidus fibreux » sont utilisés de manière équivalente et interchangeable.

Par « résidus fibreux », on entend des résidus composés majoritairement de fibres végétales (cellulose, hémicellulose et lignine) qui se caractérisent par une structure fibreuse, c'est-à-dire formée d'éléments allongés de type filamenteux ou fibrillaire, présentant un rapport longueur/diamètre élevé.

Avantageusement, la composition selon l'invention comprend des résidus fibreux comprenant entre 25% et 90%, de préférence entre 40% et 75% en poids de fibres, le pourcentage en poids étant indiqué sur le poids sec des résidus fibreux.

Les méthodes de détermination de la teneur en fibres sont bien connues de l'homme du métier. A titre d'exemple et de manière préférée, la détermination de cette teneur sera effectuée selon la méthode AOAC 985.29.

Dans toute la demande, lorsqu'aucune date n'est précisée pour un règlement, une norme ou une directive, il s'agit du règlement, de la norme ou de la directive en vigueur à la date de dépôt.

Selon la présente invention, la composition comprend des résidus fibreux obtenus après traitement thermique et mécanique de déchets organiques. Ces résidus sont principalement issus de déchets de matières organiques végétales (tiges, feuilles, écorces, pulpe, etc.), et présentent une structure fibreuse, i.e. filamenteuse permettant l'enchevêtrement et la cohésion du biomatériau final.

Avantageusement, les résidus fibreux issus de la transformation de déchets organiques végétaux provenant de fruits, de légumes et/ou de céréales proviennent de déchets végétaux issus de l'industrie agroalimentaire, et sont choisis parmi la drêche de céréales, la pulpe de fruits, la pulpe de légumes, le marc de café, le marc de fruits, le marc de légumes, une cosse végétale, ou leurs mélanges.

Avantageusement, la drêche de céréales utilisée est issue du brassage de la bière, constituée majoritairement de résidus de céréales tels que l'orge, l'orge maltée, le blé ou d'autres grains brassicoles, et correspond à un coproduit de l'industrie brassicole obtenu après extraction du moût.

De manière préférée, les résidus fibreux sont choisis parmi une drêche de céréales, de préférence une drêche d'orge, un marc de café, un marc de pomme, une cosse de sarrasin, ou leurs mélanges.

A titre d'exemples non limitatifs, les résidus fibreux peuvent provenir de fruits tels que la pomme, la prune, le coing, la rhubarbe, le citron, le cassis ; de légumes tels que la carotte, la courgette, le brocoli, le chou-fleur, l'épinard ou le haricot vert, et de céréales tels que le maïs, l'orge, le blé, l'avoine, le seigle, le soja, les graines de lin ou encore le sarrasin.

Selon un mode de réalisation avantageux, les déchets organiques utilisés dans la composition selon l'invention sont préalablement soumis à une étape de séchage, de préférence à basse température, afin de réduire leur taux d'humidité à une valeur inférieure à 10 %, tout en préservant leurs propriétés intrinsèques, notamment leur structure fibreuse.

Les résidus ainsi séchés sont ensuite soumis à une étape de broyage et/ou une étape de micronisation, de manière à réduire et homogénéiser la taille des particules, afin d'obtenir une granulométrie compatible avec leur mélange avec le liant et leur mise en forme ultérieure par thermocompression. Cette préparation peut, le cas échéant, être complétée par une étape de tamisage et/ou de criblage permettant d'éliminer les particules les plus grossières et/ou de sélectionner une fraction granulométrique déterminée. Une telle préparation permet d'obtenir des résidus fibreux plus réguliers, de limiter les hétérogénéités au sein de la composition, et de favoriser l'obtention d'un article thermo-moulé présentant une cohésion améliorée, une homogénéité satisfaisante et une aptitude satisfaisante au démoulage.

Les résidus fibreux selon l'invention se présentent notamment sous forme de poudre, de granulés ou de pellets, et présentent une granulométrie médiane D50 inférieure ou égale à 2 mm, de préférence entre 0,1 mm et 2 mm, encore plus préférentiellement entre 0,2 mm et 1,7 mm.

La granulométrie peut être déterminée par une méthode de tamisage, consistant à soumettre un échantillon de résidus fibreux à une série de tamis de mailles décroissantes, puis à déterminer la masse de chaque fraction retenue. La taille médiane D50 est ensuite calculée à partir de la distribution massique obtenue. Par « D50 », on entend, au sens de la présente invention, la taille médiane des résidus fibreux, c'est-à-dire la taille pour laquelle 50% en poids des résidus présentent une taille inférieure à cette valeur.

Les inventeurs ont notamment mis en évidence que des résidus fibreux ainsi préparés présentent une granulométrie contrôlée limitant la présence de particules trop grossières susceptibles de nuire à l'homogénéité de la composition et/ou de provoquer des défauts lors du moulage.

Le procédé de transformation des déchets organiques en résidus fibreux est mis en œuvre sans traitement chimique, ce qui permet de valoriser l'intégralité, ou sensiblement l'intégralité, de la matière organique de départ.

Les résidus fibreux selon l'invention comprennent moins de 10%, de préférence entre 0,1% et 13%, plus préférentiellement entre 0,5% et 12% en poids de sucre, les pourcentages étant indiqués sur le poids sec des résidus fibreux.

Les méthodes de détermination de la teneur en sucres sont bien connues de l'homme du métier. A titre d'exemple et de manière préférée, la détermination de cette teneur sera effectuée selon la méthode de la norme ISO 22184 :2021, ou par une méthode enzymatique spécifique telle que décrite dans AOAC 977.20.

Avantageusement, les résidus fibreux présentant un taux de sucre supérieur à 15%, le pourcentage en poids étant indiqué sur le poids sec des résidus fibreux, sont exclus de la présente invention. Par exemple, les raisins sont exclus de la présente invention.

Avantageusement, les résidus fibreux présentent un taux d'humidité inférieur à 10%, de préférence un taux d'humidité compris entre 1% et 8%, plus préférentiellement entre 2% et 7%.

Les méthodes de détermination du taux d'humidité sont bien connues de l'homme du métier. De préférence, le taux d'humidité est déterminé selon la méthode AOAC 934.06 (pour les résidus issus de fruits et légumes) ou ISO 7541 (pour produits végétaux déshydratés). Le taux d'humidité est exprimé en pourcentage par rapport à la masse initiale du résidus fibreux.

Avantageusement, la composition selon l'invention comprend entre 1% et 10% en poids de cendres, le pourcentage en poids étant indiqué sur le poids sec du résidu fibreux.

La teneur en cendres des résidus fibreux peut être déterminée par incinération d'un échantillon de résidu fibreux sec jusqu'à élimination de la matière organique, puis par pesée du résidu minéral obtenu. La teneur en cendres est exprimée en pourcentage en poids rapporté au poids sec du résidu fibreux.

Avantageusement, la composition selon l'invention comprend entre 1% et 30% en poids de protéines, le pourcentage en poids étant indiqué sur le poids sec du résidu fibreux.

La teneur en protéines des résidus fibreux peut être déterminée à partir de la teneur en azote total mesurée sur un échantillon sec, notamment selon une méthode de Kjeldahl ou de Dumas, puis convertie en teneur en protéines au moyen d'un facteur de conversion approprié, de préférence égal à 6,25. La teneur en protéines est exprimée en pourcentage en poids rapporté au poids sec du résidu fibreux.

Les résidus fibreux préparés peuvent ensuite être directement mélangés avec au moins un liant, de manière à obtenir une composition homogène apte à la fabrication d'un article thermo-moulé.

Avantageusement, la composition selon la présente invention comprend entre 10% et 98%, de préférence entre 30% et 98%, plus préférentiellement entre 40% et 95% en poids de résidus fibreux, les pourcentages étant indiqués sur le poids total de la composition.

Comme indiqué ci-avant, la composition comprend en outre un liant liquide dispersé de manière homogène dans les fibres desdits résidus fibreux.

Par « liant », on entend toute composition capable d'assurer la cohésion des résidus fibreux pour former une composition homogène, stable et éventuellement malléable ou façonnable. Le liant est introduit sous forme liquide afin d'être dispersé de manière homogène au sein de la matrice fibreuse. Il peut interagir physiquement ou chimiquement avec les fibres, selon la nature des composants.

Avantageusement, le liant peut être un polymère ou une colle, d'origine naturelle, synthétique ou semi-synthétique, destiné à assurer la cohésion des résidus fibreux de la composition soit par fusion à chaud, soit par polymérisation.

De préférence, le liant est choisi parmi des liants d'origine naturelle, tels qu'une colle végétale ou une caséine et/ou des liants d'origine synthétique ou semi-synthétique, tels qu'une colle chimique, un liant à base de polymère, notamment un liant polyuréthane à base d'isocyanate, silane polymère modifié, ou leurs mélanges.

De préférence, la colle végétale est choisie parmi l'amidon (maïs, pomme de terre, riz, bambou...) la gomme xanthane, la gomme guar, les pectines, ou des dérivés de cellulose comme la carboxymethylcellulose.

De préférence, le liant est exempt de formaldéhyde.

Le choix du ou des liants mis en œuvre dépendra des propriétés finales recherchées : consistance, résistance mécanique, hydrophobie/hydrophilie, biodégradabilité, ou encore compatibilité avec d'autres additifs ou matériaux.

Avantageusement, la composition selon la présente invention comprend entre 2% et 90%, de préférence entre 2% et 70%, plus préférentiellement entre 2% et 20% en poids de liant, les pourcentages en poids étant indiqués sur le poids total de la composition.

Par conséquent, la composition selon la présente invention est biosourcée, de préférence la composition est biosourcée à 100%. La présente invention permet ainsi de proposer une alternative durable, recyclable et biodégradable aux matériaux traditionnels issus de ressources non renouvelables (bois, plastiques, agglomérés), tout en valorisant des déchets organiques dans une logique d'économie circulaire.

Par « dispersé de manière homogène », on entend une répartition uniforme du liant au sein des fibres des résidus fibreux, c'est-à-dire sans formation de zones dépourvues de liant ni d'agrégats visibles. Plus particulièrement, l'homogénéité est considérée comme atteinte lorsque, sur un échantillonnage représentatif de la composition (par exemple environ 5 échantillons), au moins 70% des échantillons présentent une teneur locale en liant comprise dans un intervalle de ±10% relatif par rapport à la teneur moyenne en liant de la composition. À titre d'illustration, lorsque la composition comprend 10% en poids de liant, l'homogénéité est atteinte si, dans au moins 70% des échantillons analysés, la teneur locale en liant est comprise entre 9% et 11% en poids, le complément à 100 % étant constitué notamment de résidus fibreux.

Avantageusement, la composition selon la présente invention comprend, par rapport au poids total de la composition, moins de 70%, de préférence entre 1% et 50%, plus préférentiellement entre 1% et 30% en poids d'au moins un matériau choisi parmi le bois ; le plastique tel que le polyéthylène (PE), le polypropylène (PP), le polyuréthane (PU) ou encore l'éthylène-acétate de vinyle (EVA) ; les fibres végétales telles que le lin, le chanvre, jute.

Avantageusement, la composition selon la présente invention comprend au moins un additif choisi parmi des retardateurs de flamme, des agents hydrophobes, des pigments ou colorants naturels, agents antifongiques, plastifiants biosourcés, agents de couplage ou compatibilisants, des charges légères ou agents de densité, des charges renforçantes.

Avantageusement, la composition selon la présente invention comprend entre 0,1% et 20%, de préférence entre 0,5% et 15%, plus préférentiellement entre 1% et 10% en poids d'additifs, les pourcentages en poids étant indiqués sur le poids total de la composition.

L'incorporation de ces additifs, seule ou en combinaison, est réalisée en quantité compatible avec la dispersion homogène du liant.

Selon un mode de réalisation, la composition est exempte d'eau ajoutée, ou ne contient qu'une quantité résiduelle d'eau ne nuisant pas à sa mise en forme par thermocompression.

La composition telle que décrite ci-avant est apte à être mise en forme, notamment par un procédé de thermocompression.

Un autre but de l'invention est de fournir un procédé de fabrication d'un article thermo-moulé comprenant les étapes suivantes :
a) Mise en moule de la composition telle que décrite ci-avant ;
b) Chauffage du moule, de préférence à une température comprise entre 80°C et 300°C, et application d'une pression, de préférence à une pression comprise entre 100 bars et 300 bars, et pendant une durée comprise entre 1 minute et 20 minutes, afin d'obtenir ledit article thermo-moulé.

Le procédé selon la présente invention repose sur une mise en forme par thermocompression à l'aide d'une presse de thermocompression, permettant d'obtenir un article thermo-moulé, également nommé biomatériau, structuré, rigide ou semi-rigide, présentant une bonne cohésion et des propriétés mécaniques adaptées à l'application visée (par exemple : panneau, pièce moulée, élément isolant, palettes de transport etc.).

Par « biomatériau » ou « article thermo-moulé », on entend un produit obtenu ou susceptible d'être obtenu par un procédé selon la présente invention. De préférence, le biomatériau est biosourcé à 100%, c'est-à-dire que l'ensemble de ses constituants (résidus fibreux, liant, éventuels additifs) sont d'origine biologique ou renouvelable, sans apport de matière première d'origine fossile.

Une étape de préparation de la composition selon la présente invention est mise en œuvre avant l'étape a) dans laquelle les résidus fibreux et au moins un liant sont mélangés, par agitation manuelle ou mécanique (par exemple mélangeur à pales, extrudeuse), jusqu'à dispersion homogène du liant.

Par « mise en moule », on entend l'introduction, également nommée chargement, dans un moule, de la composition selon la présente invention, présentant une géométrie prédéfinie adaptée à la forme souhaitée du biomatériau final.

Avantageusement, une étape a1) comprenant l'application d'un agent de démoulage sur la surface du moule est mise en œuvre avant l'étape a). De préférence, l'agent de démoulage est laissé sécher avant l'étape a).

De préférence, lors de l'étape b), le chauffage du moule est réalisé à une température comprise entre 80°C et 250°C, plus préférentiellement entre 100°C et 200°C.

Avantageusement, la température de chauffage est appliquée par l'intermédiaire de plateaux chauffants de la presse de thermocompression. La température des plateaux est réglée de manière à dépasser la température de fusion (Tf) du liant thermoplastique, lorsque le liant agit par fusion, ou à dépasser la température de transition vitreuse (Tg) de la composition dans le cas d'un liant polymérisable. Ce réglage thermique permet d'assurer, selon le type de liant utilisé, soit la mise en fluidité du liant, soit l'activation du mécanisme de polymérisation, tout en évitant toute dégradation thermique des fibres des résidus ou du liant. L'ajustement de la température à appliquer au cours du procédé selon l'invention relève des connaissances générales de l'homme du métier.

De préférence, lors de l'étape b), la pression appliquée est comprise entre **110** bars et 250 bars, plus préférentiellement entre 130 bars et 220 bars.

La mise en forme du biomatériau est ainsi réalisée à l'aide d'un outillage et un état de surface adaptés à la forme et épaisseur souhaitées du produit final, sous une température de polymérisation ou de fusion et une pression adaptée en fonction des caractéristiques souhaitées.

L'ajustement des conditions mises en œuvre au cours du procédé de thermocompression telles que la température, la pression et la durée, relève des connaissances générales de l'homme du métier qui est capable de sélectionner les conditions adaptées en fonction des propriétés physico-chimiques des matériaux de départs utilisés (notamment résidus fibreux et liant).

Dans un mode de réalisation préféré, la thermocompression est réalisée à une température comprise entre 100°C et 150°C, par exemple à 110°C, pendant une durée comprise entre 8 et 12 minutes, par exemple pendant 10 minutes, sous une pression comprise entre 140 et 200 bars, par exemple à 190 bar.

Avantageusement, la composition selon l'invention comprend des résidus fibreux présentant un taux d'humidité inférieur à 10%, de préférence inférieur à 8%, afin d'éviter la formation de vapeur au cours du chauffage. Un taux d'humidité plus élevé entrainerait l'apparition d'imperfections sur le biomatériau, telles que des cloques, des fissures ou d'autres déformations indésirables.

Avantageusement, le procédé selon la présente invention comprend une étape c) de démoulage du biomatériau obtenu par thermocompression.

De préférence, la composition selon l'invention comprend des résidus fibreux avec moins de 15% en poids de sucre, le pourcentage en poids étant indiqué sur le poids sec du résidu fibreux. Un taux de sucre plus élevé complique en particulier le démoulage, dans la mesure où, lors du chauffage de l'étape b), le sucre peut subir une réaction de Maillard, provoquant une caramélisation qui accentue l'adhérence du biomatériau au moule et rend le démoulage plus difficile.

Avantageusement, l'homogénéité de la dispersion du liant au sein des résidus fibreux a notamment pour but d'assurer une cohésion optimale et une tenue mécanique importante. L'absence de dispersion homogène du liant au sein des résidus fibreux aboutit à des produits présentant des faiblesses mécaniques, compromettant ainsi leurs performances.

Un autre but de la présente invention est un article thermo-moulé obtenu par le procédé de fabrication selon la présente invention.

Un autre but de l'invention est l'utilisation d'une composition selon la présente invention, dans la fabrication d'articles de construction et/ou de mobilier.

La composition selon l'invention, du fait de sa structure fibreuse spécifique, présente des propriétés mécaniques, thermiques et de durabilité permettant son emploi comme matériau de base ou intermédiaire, notamment dans le domaine de la construction et/ou du mobilier.

Par « articles de mobilier », on entend notamment du mobilier tels que les meubles, plateaux de table, panneaux décoratifs, étagères, éléments modulaires, structures d'assises.

Par « articles de construction », on entend notamment des portes, panneaux muraux, cloisons, dalles de sol, parquet, coffrage, élément d'isolation.

De préférence, les articles de construction et/ou les articles de mobilier sont rigides ou semi-rigides.

Un autre but de la présente invention est de fournir un article de construction et/ou un article de mobilier, ou tout autre type de produit rigide ou semi-rigide, obtenu à partir d'une composition selon la présente invention.

Tous les aspects généraux et particuliers décrits plus haut pour la composition selon la présente invention s'appliquent également pour son utilisation.

D'autres caractéristiques et avantages de l'invention apparaîtront dans l'exemple qui suit, donné à titre illustratif.

### EXEMPLES

Les matières premières utilisées dans les exemples sont listées ci-après :
Résidu fibreux selon l'invention : Drêche de céréales issue du brassage de la bière, déshydratée, présentant notamment une teneur en fibres d'environ 47 % en poids sec, une teneur en sucres d'environ 1,3 % en poids sec, et une granulométrie médiane (D50) d'environ 1637 µm.

La drêche de céréales utilisées a été préalablement déshydratée par une étape de séchage à basse température pour atteindre une hygrométrie <10% (d'environ 5%), permettant ainsi de préserver les propriétés intrinsèques du produit.

Puis, la drêche est ensuite broyée pour obtenir une poudre, nommée poudre de résidus, qui est ensuite soumise à un tamisage.

Résidu fibreux comparatif (non conforme à la présente invention) : drêche de céréales issue du brassage de la bière, déshydratée, présentant notamment une teneur en fibres d'environ 34 % en poids sec, une teneur en sucres d'environ 15 % en poids sec, et une granulométrie médiane (D50) supérieure à 2100 µm.

La drêche de céréales (non conforme à la présente invention) utilisée a été préalablement déshydratée par une étape de séchage à basse température pour atteindre une hygrométrie <10% (environ 9%), permettant ainsi de préserver les propriétés intrinsèques du produit.

La granulométrie des résidus fibreux est déterminée par tamisage d'un échantillon représentatif sur une série de tamis de mailles décroissantes, à savoir 3,15 mm, 2 mm, 1,25 mm, 1 mm et 0,5 mm, suivi d'une pesée des fractions retenues sur chaque tamis. La distribution granulométrique peut ensuite être exprimée en pourcentage massique par classe granulométrique et/ou par une valeur de taille médiane D50.

Les teneurs en fibres, sucres, protéines, cendres et humidité sont déterminées sur des échantillons représentatifs des résidus fibreux préparés comme détaillés ci-dessus.

Liant : colle de type isocyanate.

### Exemple 1: Fabrication de plaques et d'assises à partir d'une composition selon l'invention et tests de résistances

Cet exemple illustre un procédé de thermocompression mis en œuvre à partir de résidus fibreux conformes à l'invention, à savoir d'une drêche de céréales (résidus fibreux issus de l'industrie agroalimentaire), pour la fabrication d'articles tels que des plaques et des assises.

### Etape de préparation de la composition selon l'invention

Pour la fabrication de plaques et d'assises, des mélanges de drêches de céréales (déshydratée comme indiqué ci-dessus) et de 5% à 20% en poids d'une colle du type isocyanate, les pourcentages en poids étant indiqués sur le poids total de la composition, ont été mélangés manuellement jusqu'à obtention d'une dispersion homogène du liant au sein des fibres de drêches de céréales utilisées.

### Etape de thermocompression

Une fois les compositions préparées, celle-ci sont chargées dans un moule (un moule sous forme de plaque et un moule sous forme d'assise), puis subissent une thermocompression dans une presse de thermocompression chauffante (machine classique de thermocompression).

Les conditions de thermocompression mises en œuvre pour la fabrication de plaques et d'assises sont décrites dans le Tableau 1 ci-dessous :

[Table 1]

**Tableau 1 : Conditions du procédé de thermocompression de l'exemple 1**

| **Produit** | **Température (°C)** | **Temps (minutes)** | **Pression appliquée (bar)** |
|---|---|---|---|
| Plaques | Entre 100°C et 250°C (à cœur) | Entre 5 et 20 minutes | Entre 130 et 220 bars |
| Pièces de type assise | Entre 100°C et 250°C (moule) | Entre 5 et 20 minutes | Entre 130 et 220 bars |

À l'issue de l'étape de thermocompression, des plaques de 450 mm de long, 350 mm de large, et 15 mm d'épaisseur et des assises d'épaisseur 22 mm ont pu être fabriquées.

### Tests de résistances

Des tests de résistances ont été réalisés afin de tester la tenue mécanique des assises.

Pour les assises, un essai mécanique de poinçonnement-flexion a été réalisé conformément à la norme EN 15-037-5. La résistance mesurée s'élève à 3700 N, soit une valeur largement supérieure à celle généralement observée pour un plateau en bois standard, dont la résistance varie typiquement entre 300 N et 1500 N selon l'essence du bois et l'épaisseur considérées.

Par ailleurs, un essai de résistance à la pression a été réalisé sur des accoudoirs montés sur les assises. Une résistance de 750 N a été mesurée pour chacun des accoudoirs selon la norme EN 1335-3. Cette valeur est parfaitement conforme aux exigences réglementaires recommandant une résistance des accoudoirs comprise entre 600 N et 900 N.

Le démoulage de ces produits a été effectué avec succès, sans difficulté notable. Les produits obtenus présentent une robustesse comparable, voire supérieure, à celle de plaques ou d'assises fabriquées notamment à partir de matériaux traditionnels, tels que le bois.

Ainsi, cet exemple, réalisé avec une composition comprenant de la drêche de céréales et une colle comme liant, démontre que, tant pour la fabrication de plaques que de produits de type assise, les conditions mises en oeuvre permettent d'obtenir des produits présentant une excellente homogénéité ainsi que des propriétés mécaniques très satisfaisantes.

La présente invention permet donc de fournir une composition apte à être utilisée dans une presse de thermocompression conventionnelle, tout en permettant une valorisation circulaire de déchets organiques, réduisant le coût et l'empreinte écologique de la production de support rigide ou semi-rigide, tels que des articles de construction et/ou de mobilier.

### Exemple comparatif 2 : Essai de thermocompression avec une drêche comparative hors invention

Un essai comparatif est réalisé dans des conditions analogues à celles de l'exemple 1, à l'aide d'une drêche de céréales déshydratée (non conforme à la présente invention) présentant une teneur en sucres d'environ 15 % en poids sec, une teneur en fibres d'environ 34 % en poids sec et une granulométrie médiane plus élevée (D50 d'environ 2135 µm).

### Préparation de la composition comparative

La drêche comparative est mélangée manuellement avec une colle de type isocyanate à raison de 10 % en poids, puis introduite dans un moule.

### Etape de thermocompression

Les essais sont réalisés dans les conditions de thermocompression comparables à celles décrites dans l'exemple 1.

### Résultats

Contrairement à l'exemple 1, les résultats obtenus avec la composition comparative sont seulement moyens. Il est observé une homogénéité moins satisfaisante, les grains les plus grossiers affectant la structure du produit, notamment par formation de bulles. Par ailleurs, après 10 minutes de cuisson, le démoulage est difficile. Un allongement du temps de cuisson est nécessaire pour améliorer partiellement le démoulage, sans toutefois permettre d'atteindre la qualité observée avec les résidus fibreux selon l'invention.

Un second essai comparatif réalisé à 110°C pendant 10 minutes sous 160 bar montre qu'un bon démoulage n'est obtenu qu'au prix d'une augmentation du démoulant.

Enfin, un autre essai comparatif réalisé avec 12 % en poids de colle isocyanate conduit encore à un démoulage difficile.

Cet exemple comparatif montre que l'utilisation d'une drêche présentant une teneur en sucres plus élevée et une granulométrie plus grossière ne permet pas d'obtenir, dans des conditions analogues, une combinaison satisfaisante :
- d'homogénéité,
- de qualité de surface,
- et de facilité de démoulage.

Au contraire, la composition selon l'invention permet d'obtenir des biomatériaux homogènes, bien cohésifs et facilement démoulables, y compris pour des pièces de géométrie complexe. La comparaison met ainsi en évidence un effet technique associé au choix de résidus fibreux répondant aux critères de l'invention, notamment une teneur en sucres maîtrisée et une structure fibreuse adaptée.

## Revendications

1. Composition pour la fabrication d'un article thermo-moulé, comprenant des résidus fibreux issus de la transformation de déchets organiques végétaux provenant de fruits, de légumes et/ou de céréales, et au moins un liant, **caractérisé en ce que** :
- lesdits résidus fibreux comprennent au moins 20% en poids de fibres, le pourcentage étant indiqué sur le poids sec des résidus fibreux ;
- lesdits résidus fibreux présentent une granulométrie médiane D50 inférieure ou égale à 2 mm ;
- lesdits résidus fibreux comprennent moins de 15% en poids de sucre, le pourcentage étant indiqué sur le poids sec des résidus fibreux ; et
- ledit liant est sous forme liquide et est dispersé de manière homogène dans les fibres desdits résidus fibreux.

2. Composition selon la revendication 1, dans laquelle les résidus fibreux sont choisis parmi la drêche de céréales, la pulpe de fruits, la pulpe de légumes, le marc de café, le marc de fruits, le marc de légumes, une cosse végétale, ou leurs mélanges.

3. Composition selon la revendication 1 ou 2, dans laquelle les résidus fibreux sont choisis parmi une drêche de céréales, de préférence une drêche d'orge, un marc de café, un marc de pomme, une cosse de sarrasin, ou leurs mélanges.

4. Composition selon l'une quelconque des revendications 1 à 3, comprenant entre 10% et 98% en poids de résidus fibreux, le pourcentage étant indiqué sur le poids total de la composition.

5. Composition selon l'une quelconque des revendications 1 à 4, dans laquelle les résidus fibreux comprennent moins de 10%, de préférence entre 0,1% et 13%, plus préférentiellement entre 0,5% et 12% en poids de sucre, le pourcentage étant indiqué sur le poids sec des résidus fibreux.

6. Composition selon l'une quelconque des revendications 1 à 5, dans laquelle les résidus fibreux présentent un taux d'humidité inférieur ou égal à 10%, de préférence entre 1% et 8%.

7. Composition selon l'une quelconque des revendications 1 à 6, dans laquelle les résidus fibreux comprennent entre 25% et 90% en poids de fibres, le pourcentage en poids étant indiqué sur le poids sec des résidus fibreux.

8. Composition selon l'une quelconque des revendications 1 à 7, comprenant entre 2% et 90% en poids de liant, de préférence entre 2% et 70 % en poids de liant, les pourcentages étant indiqués sur le poids total de la composition.

9. Composition selon l'une quelconque des revendications 1 à 8, dans laquelle le liant est choisi parmi des liants d'origine naturelle, tels qu'une colle végétale ou une caséine et/ou des liants d'origine synthétique ou semi-synthétique, tels qu'un liant à base de polymère, notamment un liant polyuréthane à base d'isocyanate, silane polymère modifié, ou leurs mélanges.

10. Procédé de fabrication d'un article thermo-moulé, comprenant les étapes suivantes :
a) Mise en moule de la composition selon l'une quelconque des revendications précédentes ;
b) Chauffage du moule et application d'une pression, pendant une durée comprise entre 1 minute et 20 minutes, afin d'obtenir ledit article thermo-moulé.

11. Procédé selon la revendication 10, dans lequel le chauffage du moule de l'étape b) est réalisé à une température comprise entre 80°C et 300°C.

12. Procédé selon la revendication 10 ou **11,** dans lequel la pression appliquée à l'étape b) est comprise entre 100 bars et 300 bars.

13. Article thermo-moulé obtenu par le procédé de fabrication selon l'une quelconque des revendications 10 à 12.

14. Utilisation d'une composition selon l'une quelconque des revendications 1 à 9, dans la fabrication d'articles de construction et/ou de mobilier.

15. Article de construction et/ou article de mobilier obtenu à partir d'une composition selon l'une quelconque des revendications 1 à 9.
